(19) **Europäisches Patentamt / European Patent Office / Office européen des brevets**

(11) **EP 2 562 214 B1**

(12) **EUROPEAN PATENT SPECIFICATION**

(45) Date of publication and mention of the grant of the patent:
**05.04.2017 Bulletin 2017/14**

(21) Application number: **11771991.4**

(22) Date of filing: **19.04.2011**

(51) Int Cl.:
*C08L 23/08* (2006.01)   *C08K 3/22* (2006.01)
*C08K 3/26* (2006.01)   *C08L 23/10* (2006.01)
*H01B 3/00* (2006.01)   *H01B 3/44* (2006.01)
*H01B 7/17* (2006.01)   *H01B 7/29* (2006.01)
*H01B 7/295* (2006.01)

(86) International application number:
**PCT/JP2011/059584**

(87) International publication number:
**WO 2011/132656 (27.10.2011 Gazette 2011/43)**

(54) **THERMOPLASTIC POLYMER COMPOSITION, MOLDED ARTICLE FORMED FROM SAME, AND ELECTRIC WIRE**

THERMOPLASTISCHE POLYMERZUSAMMENSETZUNG, DARAUS GEFORMTER FORMARTIKEL UND ELEKTRODRAHT

COMPOSITION POLYMÈRE THERMOPLASTIQUE, ARTICLE MOULÉ À PARTIR DE LADITE COMPOSITION ET FIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 JP 2010096958**

(43) Date of publication of application:
**27.02.2013 Bulletin 2013/09**

(73) Proprietor: **Mitsui Chemicals, Inc.**
**Tokyo 105-7117 (JP)**

(72) Inventors:
• **KAMIYA, Nozomi**
**Ichihara-shi**
**Chiba 299-0108 (JP)**
• **NODA, Kiminori**
**Ichihara-shi**
**Chiba 299-0108 (JP)**
• **KOMIYA, Kan**
**Ichihara-shi**
**Chiba 299-0108 (JP)**
• **KUROKI, Takayuki**
**Ichihara-shi**
**Chiba 299-0108 (JP)**
• **YASUI, Hiroto**
**Ichihara-shi**
**Chiba 299-0108 (JP)**

(74) Representative: **Hoffmann Eitle**
**Patent- und Rechtsanwälte PartmbB**
**Arabellastraße 30**
**81925 München (DE)**

(56) References cited:
EP-A1- 2 080 784      WO-A1-2008/059746
JP-A- 10 287 777      JP-A- 2003 226 818
JP-A- 2005 060 612    JP-A- 2006 225 568
JP-A- 2008 169 257    US-A1- 2007 251 572

**Description**

**TECHNICAL FIELD**

The present invention relates to a flame-retardant polymer composition comprising an ethylene/unsaturated ester copolymer, a propylene-based polymer and a filler; an article comprising the composition; and an electric wire and electric cable comprising the composition. The present invention also relates to a composition excellent in the balance among mechanical strength, elongation at break, hardness, flexibility and heat resistance; an article comprising the composition; and an electric wire and electric cable having an insulator and/or a sheath comprising the composition.

**BACKGROUND ART**

Propylene-based polymers are excellent in heat resistance, mechanical strength and scratch resistance, and articles obtained therefrom are used in a wide range of applications. Articles obtained from general resin compositions composed of polypropylene and inorganic fillers are also excellent in heat resistance and mechanical properties, but are poor in flexibility and impact resistance. For this reason, ethylene copolymers are primarily used in applications requiring properties such as flexibility and impact resistance. However, articles obtained from the ethylene copolymers are poor in scratch resistance and heat resistance.

To overcome this problem, an article composed of a propylene-based polymer and an inorganic filler (flame-retardant) is known as an electric wire and electric cable or a wire and electric cable harness that requires scratch resistance (Patent Literature 1).

It is also known that polypropylene is blended with a propylene/butene copolymer, polyethylene and an inorganic filler (Patent Literature 2).

It is also known that a propylene-based polymer is blended with an ethylene/$\alpha$-olefin random copolymer elastomer or a styrene elastomer together with an inorganic filler (Patent Literature 3).

On the other hand, it is known that an ethylene/vinyl acetate copolymer is blended with polypropylene, a maleic acid-modified polyethylene and a metal hydrate to form a composition (Patent Literatures 4 to 8).

Various improvements have been made as described above for thermoplastic polymer compositions using a propylene-based polymer and an ethylene/vinyl acetate copolymer. Still, there is demand for a composition further excellent in the balance among mechanical properties, hardness, flexibility and heat resistance, an article comprising the composition, and an electric wire and electric cable having an insulator and/or a sheath comprising the composition.

**CITATION LIST**

**PATENT LITERATURES**

[Patent Literature 1] JP-A-2003-313377
[Patent Literature 2] JP-A-2008-97918
[Patent Literature 3] JP-A-2008-169257
[Patent Literature 4] JP-A-2008-94977
[Patent Literature 5] JP-A-2009-114230
[Patent Literature 6] JP-A-2009-54388
[Patent Literature 7] JP-A-2009-19190
[Patent Literature 8] JP-A-2009-216836

**SUMMARY OF THE INVENTION**

**TECHNICAL PROBLEM**

It is an object of the present invention to provide a thermoplastic polymer composition excellent in the balance among mechanical strength, elongation at break, flexibility and heat resistance. It is another object of the present invention to provide an article comprising the composition, and an electric wire and electric cable having an insulator and/or a sheath comprising the composition.

**SOLUTION TO PROBLEM**

The present invention is based on the finding that the combination of an ethylene/vinyl ester copolymer with a specific propylene-based polymer achieves good filler containability of a filler, specifically, good dispersibility of an inorganic filler in a thermoplastic polymer composition, and provides a thermoplastic polymer composition excellent in the balance among mechanical strength, elongation at break, flexibility and heat resistance. Further, the present invention is based on the finding that the use of such a specific thermoplastic polymer composition provides an article excellent in the balance among mechanical strength, elongation at break, flexibility and heat resistance. The present invention has been completed based on the findings.

That is, the present invention relates to a thermoplastic polymer composition comprising 1 to 350 parts by mass of a filler (D) with respect to 100 parts by mass of polymer components that comprise 50 to 90% by mass of an ethylene/unsaturated ester copolymer (A) ; 1 to 40% by mass of a propylene-based polymer (B) having a melting point as measured by differential scanning calorimetry (DSC) of from 120 to 170°C; and 1 to 49% by mass of a propylene-based polymer (C) having a melting point as measured by differential scanning calorimetry (DSC) of lower than 120°C or not being observed, provided that the total amount of (A), (B) and (C) is 100% by mass.

In a preferable embodiment of the present invention, the propylene-based polymers (C) are a propylene/ethylene random copolymer (C-0), a propylene/C4-20 α-olefin random copolymer (C-1), and a propylene/ethylene/C4-20 α-olefin random copolymer (C-2), and have (a) a molecular weight distribution (Mw/Mn) as measured by gel permeation chromatography (GPC) of 1 to 3.

In a desirable embodiment of the present invention, the propylene/C4-20 α-olefin random copolymer (C-1) satisfies the following requirement (b):

(b) the melting point Tm(°C) and the content M (mol%) of a comonomer structural unit as determined by $^{13}$C-NMR spectrum measurement satisfy the equation (1):

$$(1) \quad 146\exp(-0.022M) \geq Tm \geq 125\exp(-0.032M),$$

wherein Tm is lower than 120°C.

In a desirable embodiment of the present invention, the propylene/ethylene/C4-20 α-olefin random copolymer (C-2) satisfies the following requirement (n):

(n) the propylene/ethylene/C4-20 α-olefin random copolymer (C-2) contains 40 to 85 mol% of a structural unit derived from propylene, 5 to 30 mol% of a structural unit derived from ethylene, and 5 to 30 mol% of a structural unit derived from C4-20 α-olefins, provided that the total amount of the structural unit derived from propylene, the structural unit derived from ethylene and the structural unit derived from C4-20 α-olefins is 100 mol%.

In a desirable embodiment of the present invention, the filler (D) is at least one filler selected from metal hydroxides, metal carbonates and metal oxides.

In a desirable embodiment of the present invention, the filler (D) is selected from at least one filler selected from organic phosphinic acid salts and polyphosphoric acid compounds.

In a desirable embodiment of the present invention, the ethylene/unsaturated ester copolymer (A) is a copolymer of ethylene and a vinyl ester compound, more desirably a copolymer of ethylene and vinyl acetate.

In a desirable embodiment of the present invention, the ethylene/unsaturated ester copolymer (A) is a copolymer of ethylene and a vinyl ester compound, more desirably a copolymer of ethylene and vinyl acetate that has a vinyl acetate content of from 25% by mass and up to 50% by mass.

In another embodiment of the present invention, these thermoplastic polymer compositions further comprise a modified olefin polymer (E), wherein the proportion of a vinyl compound having a polar group according to the modification is 0.01 to 10 parts by mass based on 100 parts by mass of the total of (A), (B), (C) and (E).

The present invention further relates to an article comprising the thermoplastic polymer composition, and the article relates to an insulator of an electric wire and electric cable or an electric wire and electric cable sheath.

**ADVANTAGEOUS EFFECTS OF THE INVENTION**

The thermoplastic polymer composition of the present invention provides performance excellent in the balance among mechanical strength, elongation at break, flexibility and heat resistance, and is widely applicable to articles, particularly suitable for electric wires and electric cables and the like.

## DESCRIPTION OF EMBODIMENTS

Hereinafter, the thermoplastic polymer composition of the present invention is described.

Ethylene/unsaturated ester copolymer (A)

An example of the ethylene/unsaturated ester copolymer (A) used in the thermoplastic polymer composition of the present invention is a copolymer of ethylene and a vinyl ester such as vinyl acetate and vinyl propionate, or a copolymer of ethylene and an alkyl ester having carbon atoms of about 20 or less of an unsaturated carboxylic acid such as acrylic acid, methacrylic acid, maleic acid, maleic anhydride, fumaric acid, itaconic acid and itaconic anhydride. Specific examples of the copolymers include copolymers of ethylene and unsaturated carboxylic acid esters such as methyl acrylate, ethyl acrylate, isopropyl acrylate, n-propyl acrylate, isobutyl acrylate, n-butyl acrylate, 2-ethylhexyl acrylate, methyl methacrylate, ethyl methacrylate, isobutyl methacrylate, n-butyl methacrylate, glycidyl methacrylate, dimethyl maleate and diethyl maleate.

In addition to being the binary copolymers as described above, the ethylene/unsaturated ester copolymer (A) may be a multicomponent copolymer obtained by copolymerizing ethylene and two or more kinds of compounds selected from the above unsaturated ester compounds. Furthermore, as long as the properties of the ethylene/unsaturated ester copolymer are not substantially changed, other polar monomers may be copolymerized in a small amount, such as acrylic acid, methacrylic acid, maleic acid, itaconic acid, maleic anhydride, itaconic anhydride and carbon monoxide.

In the present invention, among these, a copolymer of ethylene and a vinyl ester compound is preferable, examples of which include ethylene/vinyl acetate copolymer and ethylene/vinyl propionate copolymer.

In the present invention, the proportion of the unsaturated ester compound unit in the ethylene/unsaturated ester is usually 5 to 70% by mass, more preferably 15 to 60% by mass, still more preferably 25 to 50% by mass. When the proportion of the unsaturated ester compound is within these ranges, the balance between mechanical strength and flame retardance is excellent. If the proportion of the unsaturated ester compound is less than 15% by mass, flame retardance tends to be reduced. If the proportion of the unsaturated ester compound is more than 60% by mass, mechanical strength tends to be reduced.

The ethylene/unsaturated ester copolymer (A) used in the present invention preferably has a melt flow rate (190°C, 2160 g load: in accordance with JIS K7210-99) of 0.1 to 50 g/10 min, particularly preferably 0. 5 to 10 g/10 min, in view of properties, processability and the like of the resulting composition.

The ethylene/unsaturated ester copolymer (A) may be obtained by performing radical copolymerization of ethylene and an unsaturated ester compound at high temperature under high pressure.

For example, a copolymer with good random property produced by high-pressure radical polymerization process using a common autoclave method may be used.

Propylene-based polymer (B)

An example of the propylene-based polymer (B) used in the present invention is a propylene homopolymer or a copolymer of propylene and at least one C2-20 $\alpha$-olefin excluding propylene.

Examples of the C2-20 $\alpha$-olefin excluding propylene include ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. Preferred is ethylene or a C4-10 $\alpha$-olefin. These $\alpha$-olefins may form a random copolymer or a block copolymer with propylene.

The structural unit derived from these $\alpha$-olefins may be contained in an amount of not more than 35 mol%, preferably not more than 30 mol%, in all the structural units of the propylene-based polymer (B).

The propylene-based polymer (B) usually has a melt flow rate as measured at a temperature of 230°C under a load of 2.16 kg in accordance with ASTM D 1238 (MFR) of 0.01 to 1000 g/10 min, preferably 0.05 to 100 g/10 min, more preferably 0.1 to 50 g/10 min.

The propylene-based polymer (B) used in the present invention has a melting point as measured by differential scanning calorimetry (DSC) of from 120 to 170°C, preferably 125 to 165°C.

The propylene-based polymer (B) may have an isotactic structure or a syndiotactic structure, but preferably has an isotactic structure in terms of heat resistance and the like.

As required, a plurality of propylene-based polymers (B) may be used in combination: for example, two or more kinds of components differing in melting point and rigidity may be used.

In order to obtain desired properties, the propylene-based polymer (B) may be selected from:

homopolypropylene excellent in heat resistance (usually, a known polymer containing not more than 3 mol% of a copolymerizable component other than propylene),
block polypropylene excellent in the balance between heat resistance and impact resistance (usually, a known polymer containing 3 to 30% by mass of a n-decane soluble component), and
random polypropylene excellent in the balance between flexibility and transparency (usually, a known polymer having a melting peak temperature as measured by differential scanning calorimetry (DSC) of not lower than 120°C, preferably 125°C to 150°C). These may be used in combination.

The propylene-based polymer (B) may be produced by polymerizing propylene or by copolymerizing propylene and another olefin for example with the use of a Ziegler catalyst system comprising a solid catalyst component containing magnesium, titanium, a halogen and an electron donor as an essential component, an organoaluminum compound and an electron donor, or with the use of a metallocene catalyst system using a metallocene compound as a catalyst component.

Propylene-based polymer (C)

An example of the propylene-based polymer (C) used in the present invention is a propylene homopolymer or a copolymer of a propylene and at least one C2-20 olefin excluding propylene. The C2-20 $\alpha$-olefins excluding propylene may be similar to those mentioned for the propylene-based polymer (B), and preferable ranges thereof may be similar to those mentioned for the propylene-based polymer (B). These $\alpha$-olefins may form a random copolymer or a block copolymer with propylene.

The propylene-based polymer (C) contains a structural unit derived from propylene usually in an amount of 40 to 100 mol%, preferably 40 to 99 mol%, more preferably 40 to 92 mol%, still more preferably 50 to 90 mol%; and a structural unit derived from C2-20 $\alpha$-olefins excluding propylene used as a comonomer usually in an amount of 0 to 60 mol%, preferably 1 to 60 mol%, more preferably 8 to 60 mol%, still more preferably 10 to 50 mol%, provided that the total amount of propylene and the C2-20 $\alpha$-olefin is 100 mol%.

The propylene-based polymer (C) used in the present invention usually has a melt flow rate (MFR, ASTM D1238, temperature 230°C, under a load of 2.16 kg) of 0.1 to 50 g/10 min. The propylene-based polymer (C) has a melting point as measured by differential scanning calorimetry (DSC) of lower than 120°C, more preferably from 40 °C to lower than 110°C, still more preferably 60°C to 100°C. In another embodiment, the propylene-based polymer (C) preferably has a melting point that is not observed.

Here, the melting point not being observed means that the crystal melting peak having a crystal heat of fusion of not less than 1 J/g is not observed in the range of from -150 to 200°C. Measurement conditions are as described in Examples.

The propylene-based polymer (C) usually has an intrinsic viscosity [$\eta$] as measured in decalin at 135 °C of 0.01 to 10 dl/g, preferably 0.05 to 10 dl/g. The propylene-based polymer (C) preferably has a triad tacticity (mm fraction) as measured by $^{13}$C-NMR of 85% or more, more preferably 85 to 97.5%, still more preferably 87 to 97%, particularly preferably 90 to 97%. When the triad tacticity (mm fraction) is within these ranges, in particular the balance between flexibility and mechanical strength is excellent, and thus these ranges are preferred in the present invention. The mm fraction can be measured by a method described in page 21, line 7 to page 26, line 6 of WO 2004-087775.

The propylene-based polymer (C) may be produced by a method which is not particularly limited, but may be produced, for example, by polymerizing propylene or by copolymerizing propylene and another $\alpha$-olefin in the presence of a known catalyst capable of polymerizing $\alpha$-olefins so as to have stereoregularity, i.e., an isotactic structure or a syndiotactic structure, for example, a catalyst containing a solid titanium component and an organic metal compound as a main component, or a metallocene catalyst using a metallocene compound as a catalyst component. The propylene-based polymer (C) may be produced by polymerizing propylene or by copolymerizing propylene and another $\alpha$-olefin in the presence of a known catalyst capable of polymerizing $\alpha$-olefins so as to have an atactic structure. The propylene-based polymer (C) is preferably obtained by copolymerizing propylene and a C2-20 $\alpha$-olefin excluding propylene in the presence of a metallocene catalyst, as is described later.

A specific example of the propylene-based polymer (C) having features as described above is at least one selected from a propylene/ethylene random copolymer (C-0), a propylene/C4-20 $\alpha$-olefin random copolymer (C-1) and a propylene/ethylene/C4-20 $\alpha$-olefin random copolymer (C-2).

The use of the propylene/ethylene random copolymer (C-0) or the propylene/C4-20 $\alpha$-olefin random copolymer (C-1), for example allows for exhibiting the compatibility with a polypropylene crystalline component contained in the propylene-based polymer (B), and leads to the provision of a thermoplastic polymer composition further excellent in mechanical strength, elongation at break, and scratch resistance.

The propylene/ethylene/C4-20 $\alpha$-olefin random copolymer (C-2) also has compatibility with a crystalline component of polypropylene, as is the case with the propylene/C4-20 $\alpha$-olefin random copolymer (C-1). The use of the propylene/ethylene/C4-20 $\alpha$-olefin random copolymer (C-2) provides a thermoplastic polymer resin composition further excellent in flexibility, elongation at break and scratch resistance.

The propylene/ethylene random copolymer (C-0), the propylene/C4-20 α-olefin random copolymer (C-1) and the propylene/ethylene/C4-20 α-olefin random copolymer (C-2), each of which is preferably used in the present invention, desirably have (a) a molecular weight distribution (Mw/Mn) as measured by gel permeation chromatography (GPC) of 1 to 3.

Propylene/ethylene random copolymer (C-0)

The propylene/ethylene random copolymer (C-0) preferably used in the present invention is a random copolymer obtained by randomly copolymerizing propylene and ethylene, and contains a structural unit derived from propylene usually in an amount of 50 to 95 mol%, preferably 55 to 90 mol%, more preferably 60 to 88 mol%; and a structural unit derived from ethylene used as a comonomer usually in an amount of 5 to 50 mol%, preferably 10 to 45 mol%, more preferably 12 to 40 mol%, provided that the total amount of propylene and ethylene is 100 mol%.

Propylene/C4-20 α-olefin random copolymer (C-1)

An example of the propylene/C4-20 α-olefin random copolymer (C-1) preferably used in the present invention is a copolymer of propylene and at least one C4-20 α-olefin excluding propylene. Examples of the C4-20 α-olefin excluding propylene include 1-butene, 1-pentene, 1-hexene, 4-methyl-1-pentene, 1-octene, 1-decene, 1-dodecene, 1-tetradecene, 1-hexadecene, 1-octadecene and 1-eicosene. Among the propylene/C4-20 α-olefin random copolymers (C-1), a preferred propylene/C4-20 α-olefin random copolymer (C-1) satisfies the following requirement (b):

(b) the melting point Tm (°C) and the content M (mol%) of a comonomer structural unit as determined by $^{13}$C-NMR spectrum measurement satisfy the equation (1):

$$(1)\ 146\exp(-0.022M) \geq Tm \geq 125\exp(-0.032M),$$

wherein Tm is lower than 120°C, preferably not higher than 100°C.

The melting point Tm of the propylene/C4-20 α-olefin random copolymer (C-1) is measured by DSC as follows: a sample is put in an aluminum pan, and heated at 100 °C/min to 200 °C, kept at 200 °C for 5 minutes, and then cooled at 10 °C /min to -150 °C and thereafter heated at 10°C/min to 200°C; a temperature of an endothermic peak observed during the second heating is given as a melting point Tm. The propylene/C4-20 α-olefin random copolymer (C-1) usually has a melting point Tm of lower than 120°C, preferably not higher than 100°C, more preferably 40 to 95°C, still more preferably 50 to 90°C. When the melting point Tm is within these ranges, an article excellent particularly in the balance between flexibility and strength is obtained, and moreover, the resulting article has a surface with suppressed tackiness, and thus the article comprising the composition of the present invention is easy to apply.

In a preferable embodiment, the propylene/C4-20 α-olefin random copolymer (C-1) further has a (c) crystallinity as measured by X-ray diffraction of not higher than 40%, more preferably not higher than 35%.

The propylene/C4-20 α-olefin random copolymer (C-1) contains a structural unit derived from C4-20 α-olefins preferably in an amount of 5 to 50 mol%, more preferably 10 to 35 mol%. In particular, the C4-20 α-olefin is preferably 1-butene.

Such a propylene-based polymer may be obtained by a method described in, for example, WO 2004/87775.

Propylene/ethylene/C4-20 α-olefin random copolymer (C-2)

An example of the propylene/ethylene/C4-20 α-olefin random copolymer (C-2) preferably used in the present invention is a copolymer of propylene, ethylene and at least one C4-20 α-olefin excluding propylene. As the C4-20 α-olefin excluding propylene, those mentioned for the propylene/C4-20 α-olefin random copolymer (C-1) can be mentioned.

The propylene/ethylene/C4-20 α-olefin random copolymer (C-2) suitably used in the present invention satisfies the following requirement (n):

(n) the propylene/ethylene/C4-20 α-olefin random copolymer (C-2) contains 40 to 85 mol% of a structural unit derived from propylene, 5 to 30 mol% of a structural unit derived from ethylene, 5 to 30 mol% of a structural unit derived from C4-20 α-olefins, provided that the total amount of the structural unit derived from propylene, the structural unit derived from ethylene and the structural unit derived from C4-20 α-olefins is 100 mol%. The total amount of the structural unit derived from ethylene and the structural unit derived from C4-20 $\alpha$-olefins is preferably 60 to 15 mol%.

It is desirable that the propylene/ethylene/C4-20 $\alpha$-olefin random copolymer (C-2) further satisfies at least one of the following requirements (o) and (p), more preferably both of the following requirements (o) and (p):

(o) Shore A hardness is 30 to 90, preferably 35 to 60.
(p) The crystallinity as measured by X-ray diffraction is not higher than 20%, preferably not higher than 10%.

The propylene/ethylene/C4-20 $\alpha$-olefin random copolymer (C-2) desirably has a melting point Tm as measured by DSC of not higher than 50°C or not being observed. The melting point not being observed is more preferable. The melting point can be measured in the same manner as described for the copolymer (C-1).

The amount of the propylene component and the amount of the other comonomer components are described in more detail as follows. It is desirable that the structural unit derived from propylene is contained preferably in an amount of 60 to 82 mol%, more preferably 61 to 75 mol%; the structural unit derived from ethylene is contained preferably in an amount of 8 to 15 mol%, more preferably 10 to 14 mol%; and the structural unit derived from C4-20 $\alpha$-olefins is contained preferably in an amount of 10 to 25 mol%, more preferably 15 to 25 mol%, provided that the total amount of the structural unit derived from propylene, the structural unit derived from ethylene and the structural unit derived from C4-20 $\alpha$-olefins is 100 mol%. In particular, the C4-20 $\alpha$-olefin is preferably 1-butene.

The propylene/ethylene/$\alpha$-olefin random copolymer (C-2) may be obtained by a method described in, for example, WO 2004/87775.

In the present invention, the use of the propylene/ethylene/C4-20 $\alpha$-olefin random copolymer (C-2) provides an article having further improved flexibility, larger elongation at break and lower embrittlement-temperature in low temperature environment. For example, in the case where this article is an electric wire and electric cable, even when exposed to low temperature, the electric wire and electric cable coating hardly undergoes cracking.

The propylene-based polymer (C), specific examples of which include the propylene/ethylene random copolymer (C-0), the propylene/C4-20 $\alpha$-olefin random copolymer (C-1) and the propylene/ethylene/C4-20 $\alpha$-olefin random copolymer (C-2), may be a polymer obtained by modifying part of or whole of the propylene-based polymer (C) with a vinyl compound having a polar group described later, as required.

The vinyl compound having a polar group and the modification method that are employable in this case may be a vinyl compound having a polar group and a modification method that are employed for a modified olefin polymer (E) described later.

Filler (D)

The filler (D) used in the present invention is not particularly limited, and may be various fillers including general inorganic fillers and organic fillers that serve as flame-retardants, molding assistants, slip agent and the like.

Among these, when inorganic fillers are used, at least one inorganic filler selected from metal hydroxides, metal carbonates and metal oxides is preferred.

The metal hydroxides used in the present invention, which are not particularly limited, include aluminum hydroxide, magnesium hydroxide, calcium hydroxide, barium hydroxide, manganese hydroxide, zinc hydroxide and hydrotalcite and mixtures of these metal hydroxides. Preferable metal hydroxides include magnesium hydroxide and a mixture of magnesium hydroxide and a metal hydroxide other than magnesium hydroxide; and aluminum hydroxide and a mixture of aluminum hydroxide and a metal hydroxide other than aluminum hydroxide, e.g., a mixture of aluminum hydroxide and magnesium hydroxide.

The metal carbonates used in the present invention, which are not particularly limited, include calcium carbonate, magnesium carbonate, zinc carbonate, barium carbonate and mixtures of these metal carbonates.

The metal oxides used in the present invention, which are not particularly limited, include alumina, zinc oxide, titanium oxide, magnesium oxide, calcium oxide and mixtures of these metal oxides.

Among these, magnesium hydroxide, aluminum hydroxide, basic magnesium carbonate and hydrotalcite are preferable, and the use of magnesium hydroxide and/or aluminum hydroxide is preferable.

As the inorganic fillers, those usually having an average particle diameter of about 0.05 to 20 micrometer ($\mu$m), preferably about 0.1 to 5 micrometer ($\mu$m) are employable. In order to improve the dispersibility with respect to the polymer components of the composition, those having their surfaces treated with a surface-treating agent are preferably used. Examples of the surface-treating agent include alkali metal salts of higher fatty acids such as sodium caprate, sodium laurate, sodium myristate, sodium palmitate, sodium stearate, potassium stearate, sodium oleate, potassium oleate and sodium linoleate; higher fatty acids such as capric acid, lauric acid, myristic acid, palmitin, stearic acid, oleic acid and linoleic acid; fatty acid amides; fatty acid esters; higher aliphatic alcohols; titanium coupling agents such as isopropyltriisostearoyl titanate, isopropyltris(dioctylpyrophosphate)titanate and tetraisopropylbis(dioctylphosphite)titanate; silane coupling agents such as vinyl triethoxysilane, γ-methacryloxypropyltrimethoxysilane, γ-glycidoxypropyltrimethoxysilane; silicone oils; and various phosphoric acid esters.

Other examples of the filler (D) that are optionally used in the present invention include organic and inorganic flame retardance imparting agents (flame-retardants and flame-retardant assistants).

Usually, these organic and inorganic flame retardance imparting agents (flame-retardants and flame-retardant assistants) alone are used, independently of the filler (D) including metal hydroxides, metal carbonates and metal oxides as described above. However, as required, the filler (D) such as metal hydroxides, metal carbonates and metal oxides may be used in combination with the organic and inorganic flame retardance imparting agents (flame-retardants and flame-retardant assistants).

The organic and inorganic flame retardance imparting agents (flame-retardants and flame-retardant assistants) as other examples of the filler (D) are described below.

Examples of the flame retardance imparting agents that are employed include bromine-based flame retardance imparting agents; phosphorus-based flame retardance imparting agents such as red phosphorus, phosphoric acid esters, phosphoric acid amides and organic phosphine oxides; ammonium polyphosphate; nitrogen-based flame retardance imparting agents such as phosphazene, triazine and melamine cyanurate; metal salt-based flame retardance imparting agents such as alkali metal salts of polystyrene sulfonic acid; inorganic flame retardance imparting agents such as zinc borate and zinc stannate; and silicone-based flame retardance imparting agents such as silicone resins and silicone oils.

These flame retardance imparting agents may be used singly, or two or more kinds thereof may be used in combination, as required.

Among these, the phosphorus-containing flame retardance imparting agents are preferable, and examples thereof include phosphorus-based flame retardance imparting agents including red phosphorus, phosphoric acid esters, phosphoric acid amides and organic phosphinic acid salts, and ammonium polyphosphate (APP) as described above. Known phosphorus-containing flame retardance imparting agents used as a flame-retardant are employable. Specific examples thereof include ammonium phosphate, melamine pyrophosphate, ammonium polyphosphate and melamine polyphosphate, with polyphosphoric acid compounds such as melamine pyrophosphate and melamine polyphosphate being preferable. These phosphorus-containing flame retardance imparting agents include modified phosphoric acid compounds that have their surfaces modified or coated with melamine, a melamine resin, a fluoropolymer or the like; and melamine-crosslinked phosphoric acid compounds obtained by crosslinking with melamine. These phosphorus-containing flame retardance imparting agents may be used singly, two or more kinds thereof may be used in combination.

As the nitrogen-based flame retardance imparting agents, compounds containing a triazine ring can be mentioned. Examples thereof include compounds generally known as a flame-retardant, such as melamine, ammeline, melam, benzoguanamine, acetoguanamine, phthalodiguanamine, melaminecyanurate, melamine pyrophosphate, butylenediguanamine, norbornenediguanamine, methylenedimelamine, ethylenedimelamine, trimethylenedimelamine, tetramethylenedimelamine, hexamethylenedimelamine and 1,3-hexylenedimelamine. Among these, melaminecyanurate is preferable.

The amount of the flame retardance imparting agents such as the compounds having a triazine ring may be the blending proportion of the filler (D) as described above, but is 0.1 to 100 parts by mass, more preferably 0.1 to 80 parts by mass, still more preferably 5 to 60 parts by mass based on 100 parts by mass of the total of the polymer components (A), (B) and (C) and optionally (E) of the present invention. If the blending amount is less than 0.1 part by mass, the generation of a combustion inert gas (nitrogen gas) from this compound tends to be insufficient, and the synergistic effect with another flame retardance imparting agent tends to be insufficient. On the other hand, even if the amount is more than 100 parts by mass, there is not much difference in flame retardance effect, and rather, such an amount may adversely affect molding processability or mechanical properties and the like of the resulting article, and thus is not desirable.

In the embodiment using phosphorus-containing flame retardance imparting agents, the amount of the phosphorus-containing flame retardance imparting agent is 15 to 100 parts by mass, more preferably 30 to 90 parts by mass, still more preferably 35 to 80 parts by mass, based on 100 parts by mass of the total of the polymer components (A), (B) and (C), and optionally (E) of the present invention.

The inorganic flame retardance imparting agents include antimony compounds such as antimony trioxide, antimony pentaoxide and sodium antimonate; zinc compounds such as zinc sulfate, zinc stannate, zinc hydroxystannate and zinc borate; iron compounds such as ferrous hydroxyzincate and ferric oxide; tin compounds such as metastannic acid, stannous oxide and stannic oxide; and tungsten compounds such as metal salts of tungstic acid, composite oxide acids of tungsten and a metalloid; zirconium compounds; and hydrotalcites; these may be surface-treated with a fatty acid, a silane coupling agent or the like. Among these, zinc compounds, in particular at least one zinc salt selected from zinc stannate, zinc hydroxystannate and zinc borate, are preferable. The blending of these compounds further improves flame retardance, and moreover increases a shell formation rate during combustion and leads to more solid formation of the shell. It is preferred that the zinc borate, zinc hydroxystannate and zinc stannate each have an average particle diameter of not more than 5 micrometer (μm), more preferably not more than 3 micrometer (μm). Examples of the zinc borate include ALCANEX FRC-500 ($2ZnO/3B_2O_3 \cdot 3.5H_2O$), FRC-600 (product name, manufactured by MIZUSAWA INDUSTRIAL CHEMICALS, LTD.). Examples of the zinc stannate ($ZnSnO_3$) and zinc hydroxystannate ($ZnSn(OH)_6$) include ALCANEX ZS and ALCANEX ZHS (product name, manufactured by MIZUSAWA INDUSTRIAL CHEMICALS, LTD.).

Examples of the silicone-based flame retardance imparting agents include silicone resins and silicone oils. Examples of the silicone resins include resins having three-dimensional net-like structure formed by combining structures of any of $SiO_2$, $RSiO_{3/2}$, $R_2SiO$ and $R_3SiO_{1/2}$, wherein R is an alkyl group such as methyl group, ethyl group and propyl group, or an aromatic group such as phenyl group and benzyl group, or a substituent formed when any of the above substituents has a vinyl group. Examples thereof include silicone oils such as dimethyl silicone oil and methylphenyl silicone oil; modified silicone oils such as epoxy-modified silicone oil, alkyl-modified silicone oil, amino-modified silicone oil, carboxyl-modified silicone oil, alcohol-modified silicone oil and ether-modified silicone oil; silicone rubbers such as dimethyl polysiloxane rubber and methyl vinyl polysiloxane rubber; silicone resins such as methyl silicone resin and ethyl silicone resin; and fine particulate silicone powder (Si powder).

The silicone powder (Si powder) and the like as described above serve also as a molding assistant and a slip agent.

In the embodiment using the silicone-based flame retardance imparting agents of the present invention, the amount of the silicone-based flame retardance imparting agent is 1 to 30 parts by mass, more preferably 2 to 20 parts by mass, still more preferably 2 to 15 parts by mass, based on 100 parts by mass of the total of the polymer components (A), (B), (C) and optionally (E) of the present invention.

As described above, the fillers (D) used in the present invention include organic fillers, inorganic fillers, various flame retardance imparting agents, molding assistants and slip agents, and at least one of these is used as required.

The proportion of the filler (D) is preferably 1 to 350 parts by mass, more preferably 100 to 300 parts by mass, based on 100 parts by mass of the total of (A), (B) and (C). This allows the thermoplastic polymer composition to achieve a balance among flame retardance, mechanical properties and flexibility.

Modified olefin polymer (E)

In the present invention, a modified olefin polymer (E) is preferably used together with the ethylene/unsaturated ester copolymer (A), the propylene-based polymer (B) and the propylene-based polymer (C).

The modified olefin polymer (E) is a modified product of a polymer other than the ethylene/unsaturated ester copolymer (A), the propylene-based polymer (B) and the propylene-based polymer (C), with examples thereof including modified polyolefins such as modified polyethylene, modified polypropylene, modified polybutene, modified poly(4-methylpentene), modified ethylene/$\alpha$-olefin copolymers, e.g., modified ethylene/propylene copolymer and modified ethylene/1-butene copolymer, modified propylene/$\alpha$-olefin copolymers, e.g., modified propylene/1-butene copolymer, modified propylene/ethylene/$\alpha$-olefin copolymer wherein the $\alpha$-olefin is selected from C4-20 $\alpha$-olefins, e.g., modified propylene/ethylene/1-butene copolymer; and modified ethylene unsaturated ester copolymer such as modified ethylene vinyl acetate copolymer and modified ethylene acrylic acid ester copolymers.

These can be produced by graft modifying unmodified polymers.

Examples of the vinyl compound having a polar group employed for the modification include vinyl compounds that have an oxygen-containing group such as an acid, an acid anhydride, an ester, an alcohol, an epoxy and an ether; vinyl compounds that have a nitrogen-containing group such as an isocyanate and an amide; and vinyl compounds having a silicon-containing group such as a vinylsilane.

Among these, the vinyl compounds that have an oxygen-containing group are preferable, and specifically preferred are unsaturated epoxy monomers, unsaturated carboxylic acids and derivatives thereof. Examples of the unsaturated epoxy monomers include unsaturated glycidyl ethers and unsaturated glycidyl esters (for example, glycidyl methacrylate). Examples of the unsaturated carboxylic acids include acrylic acid, maleic acid, fumaric acid, tetrahydrophthalic acid, itaconic acid, citraconic acid, crotonic acid, isocrotonic acid and nadic acid™ (endo-cis-bicyclo[2,2,1] hept-5-ene-2,3-dicarboxylic acid).

Examples of the derivatives of the unsaturated carboxylic acids include acid halide compounds, amide compounds, imide compounds, acid anhydrides and ester compounds of the above unsaturated carboxylic acids. Specific examples thereof include malenyl chloride, maleimide, maleic anhydride, citraconic anhydride, monomethyl maleate, dimethyl maleate and glycidyl maleate.

Among these, the unsaturated dicarboxylic acids and acid anhydrides thereof are more preferable, and particularly preferred are maleic acid, nadic acid™ and acid anhydrides thereof.

The graft position of the unsaturated carboxylic acids or derivatives thereof to be grafted to the above unmodified olefin polymers is not particularly limited, as long as the unsaturated carboxylic acids or derivatives thereof are bonded to any carbon atom of the olefin polymers.

The modified olefin polymer (E) as described above may be prepared by various known methods, for example, methods as described below.

(1) a method in which the above unmodified olefin polymer is molten with an extruder or the like, and an unsaturated carboxylic acid or its derivative is added thereto, to thereby perform graft copolymerization; and
(2) a method in which the above unmodified olefin polymer is dissolved in a solvent, and an unsaturated carboxylic acid or its derivative is added thereto, to thereby perform graft copolymerization.

In any of the above methods, graft reaction is performed preferably in the presence of a radical initiator for efficient graft copolymerization of the above graft monomers such as unsaturated carboxylic acids.

Employable examples of the radical initiator include organic peroxides and azo compounds. Examples of the organic peroxides include benzoyl peroxide, dichlorobenzoyl peroxide, and dicumyl peroxide. Examples of the azo compounds include azobisisobutylnitrile and dimethyl azoisobutyrate.

Specific examples of the radical initiators that are preferably used include dialkyl peroxides such as dicumyl peroxide, di-tert-butylperoxide, 2,5-dimethyl-2,5-di(tert-butylperoxy)hexine-3,2,5-dimethyl-2, 5-di(tert-butylperoxy)hexane and 1,4-bis(tert-butylperoxyisopropyl)benzene.

The radical initiator is used usually in an amount of 0.001 to 1 part by mass, preferably 0.003 to 0.5 part by mass, still more preferably 0.05 to 0.3 part by mass, based on 100 parts by mass of the unmodified olefin polymer.

In the graft reaction employing the radical initiators, or in the graft reaction not employing the radical initiators, the reaction temperature is usually 60 to 350°C, preferably 150 to 300°C.

The graft amount of the vinyl compound having a polar group in the modified olefin polymer (E) thus obtained is usually 0.01 to 10% by mass, preferably 0.05 to 5% by mass, provided that the mass of the modified olefin polymer is 100% by mass.

In the present invention, the use of the modified olefin polymer (E) as described above particularly increases the interaction between the filler (D) and the polymer components, resulting in the provision of a thermoplastic polymer composition excellent in the balance among mechanical strength, elongation at break, flexibility and heat resistance.

Instead of adding the modified olefin polymer (E) or together with the modified olefin polymer (E), at least part of or whole of the polymers (A), (B) and (C) may be modified. In this case, too, similar effects are obtained.

In this case, the modification may be performed in accordance with the description set forth for the olefin polymer (E) as described above. In the present invention, the polymers (A), (B) and (C) include a modified polymer (A), a modified polymer (B) and a modified polymer (C), respectively, which are obtained by modifying part of or whole of the polymers (A), (B) and (C). Thermoplastic polymer composition

The thermoplastic polymer composition of the present invention comprises 1 to 350 parts by mass of the filler (D) with respect to 100 parts by mass of the polymer components comprising 50 to 90% by mass of the ethylene/unsaturated ester copolymer (A) ; 1 to 40% by mass of the propylene-based polymer (B) having a melting point as measured by differential scanning calorimetry (DSC) of from 120 to 170°C; and 1 to 49% by mass of the propylene-based polymer (C) having a melting point as measured by differential scanning calorimetry (DSC) of lower than 120°C or not being observed, provided that the total amount of (A), (B) and (C) is 100% by mass.

Among the thermoplastic polymer compositions of the present invention, a thermoplastic polymer composition according to a preferred embodiment comprises 100 to 300 parts by mass of the filler (D) with respect to 100 parts by mass of the polymer components comprising the ethylene/unsaturated ester copolymer (A) in an amount of 52 to 90% by mass, more preferably 55 to 90% by mass, still more preferably 55 to 85% by mass; the propylene-based polymer (B) having a melting point as measured by differential scanning calorimetry (DSC) of from 120 to 170°C in an amount of 1 to 30% by mass, more preferably 1 to 20% by mass, still more preferably 1 to 10% by mass; and the propylene-based polymer (C) having a melting point as measured by differential scanning calorimetry (DSC) of lower than 120°C or not being observed in an amount of 5 to 49% by mass, more preferably 9 to 40% by mass, still more preferably 9 to 35% by mass, provided that the total amount of (A), (B) and (C) is 100% by mass.

The polymer components containing more than 40% by mass of the propylene-based polymer (B) lead to reduced flexibility, elongation at break and flame retardance. The polymer components containing more than 49% by mass of the propylene-based polymer (C) lead to reduced flame retardance.

When the modified olefin polymer (E) is used in combination, it is desirable that the modified olefin polymer (E) is used in such a manner that the proportion of the modified olefin polymer (E) in the thermoplastic polymer composition is controlled such that the proportion of the vinyl compound having a polar group according to the modification is 0.01 to 10 parts by mass based on 100 parts by mass of the total of the ethylene/unsaturated ester copolymer (A), the propylene-based polymer (B), the propylene-based polymer (C) and the modified olefin polymer (E).

When part of or whole of the polymers (A), (B) and (C) is modified with the vinyl compound having a polar group, the amount of the vinyl compound having a polar group contained in such polymers is included in the above-mentioned graft amount.

In general, a polymer other than the polymer components (A), (B) and (C) is previously graft-modified with a vinyl compound having a polar group, to give the modified olefin polymer (E). In this case, the modified olefin polymer (E) in which the amount of the vinyl compound having a polar group is 0.01 to 10% by mass, preferably 0.05 to 5% by mass provided that the mass of the modified olefin polymer is 100% by mass is incorporated in an amount of 2 to 30% by mass, preferably 3 to 20% by mass of the polymer components comprising (A), (B), (C) and (E) of the thermoplastic polymer composition of the present invention, provided that the total amount of (A), (B), (C) and (E) is 100% by mass.

When the polymer component (E) is not used and any of the polymer components (A), (B) and (C) of the present invention is partly or wholly graft-modified, the modification is performed in such a manner that the proportion of the vinyl compound having a polar group according to the modification is 0.01 to 10 parts by mass based on 100 parts by mass of the total of the polymers (A), (B) and (C).

The ratios among (A), (B) and (C) in the embodiment using the modified olefin copolymer (E) are similar to those in the embodiment not using the modified olefin copolymer (E). The proportion of the amount of the filler (D) is 1 to 350 parts by mass, more preferably 100 to 300 parts by mass, based on 100 parts by mass of the total of (A), (B), (C) and (E).

The thermoplastic polymer composition of the present invention may optionally contain additives as long as they are not detrimental to the object of the present invention, such as other synthetic resins, other rubbers, antioxidants, heat stabilizers, UV absorbents, weathering stabilizers, antistatic agents, antislip agents, antiblocking agents, nucleating agents, pigments, dyes, slip agents, hydrochloric acid absorbents and copper inhibitors.

The addition amounts of such other synthetic resins, other rubbers, additives and the like are not particularly limited as long as not being detrimental to the object of the present invention. The thermoplastic polymer composition in an exemplary preferred embodiment contains the components (A), (B), (C), (D) and (E) in a total amount of 60 to 100% by mass, preferably 80% by mass to 100% by mass, and the rest in the thermoplastic polymer composition is composed of the above other synthetic resins, other rubbers, additives and like. Such components include polyolefin waxes such as polyethylene wax and polypropylene wax, low-density polyethylene, middle-density polyethylene, low-density polyethylene, LLDPE composed of a copolymer of ethylene and a C4-10 $\alpha$-olefin, ethylene elastomers and styrene elastomers.

The thermoplastic polymer composition of the present invention may be produced by a known method. For example, the thermoplastic polymer composition may be obtained by simultaneously or sequentially mixing the individual components placed in a Henschel mixer, a V-blender, a tumbler mixer, a ribbon blender and the like and then melt kneading the mixture with a monoaxiial extruder, multiaxial extruder such as a biaxial extruder, a kneader, a Banbury mixer and the like.

Among these, the use of apparatus excellent in kneading performance such as a multiaxial extruder, a kneader and a Banbury mixer can provide a high quality thermoplastic polymer composition in which each component is dispersed with more uniformity. In any stage of the production described above, other additives such as antioxidants may be added.

The order of adding the individual components is not particularly limited. When the modified olefin polymer (E) is used in combination, a desirable order is such that the propylene-based polymer (B), the propylene-based polymer (C) and the modified olefin polymer (E) are previously melt kneaded, and the resultant product is melt kneaded together with the other components, or such that part of these polymer components and the whole of the filler (D) are melt kneaded to form master batches, and these are melt kneaded. Thereby, a composition excellent in the balance among mechanical strength, hardness, flexibility and heat resistance can be obtained.

Article

The article of the present invention comprises the thermoplastic polymer composition as described above. The above thermoplastic polymer composition can be melt-molded into various forms by known melt molding methods. The known melt molding methods include extrusion molding, rotating molding, calender molding, injection molding, compression molding, transfer molding, powder molding, blow molding and vacuum molding. The propylene resin composition according to an embodiment of the present invention contains the filler at high proportion and is excellent in the balance among mechanical strength, flexibility and heat resistance. The thermoplastic polymer composition of the present invention is widely applicable for articles having flame retardance, such as electric wires and electric cables and building materials.

The article as described above may be a composite article formed with an article composed of other materials, such as a laminate.

The article is excellent in the balance of properties, i.e. , maintaining mechanical strength and being excellent in flexibility as well as in scratch resistance, and therefore can be applied suitably for, e.g., the coating of electric wires and electric cables including the use as an insulator of an electric wire and electric cable and an electric wire and electric cable sheath, typified by the coating of optical fibers. With the article of the present invention, in particular, an article such as a tubular electric wire and electric cable can have improved scratch resistance. Thus, taking advantage of its flexibility and its heat resistance, the article of the present invention is suited for an electric wire and electric cable sheath and an electric wire and electric cable coating for consumer and household devices such as a power cord.

The coating layers such as an insulator of an electric wire and electric cable and an electric wire and electric cable sheath as described above are formed around electric wires and electric cables by a known method e.g., extrusion molding.

Hereinafter, the present invention is described in greater detail based on Examples.

**EXAMPLES**

Components (A) to (E)

Ethylene/unsaturated ester copolymer (A)

Ethylene/vinyl acetate copolymer (EVA-1)

EVAFLEX EV40LX (product name, manufactured by DuPont-Mitsui Polychemicals Co., Ltd.), vinyl acetate content: 41% by mass, MFR (measured in accordance with JIS K 7210-99, at 190°C, under a load of 2.16 kg): 2 g/10 min

Ethylene/vinyl acetate copolymer (EVA-2)

EVAFLEX EV270 (product name, manufactured by DuPont-Mitsui Polychemicals Co. , Ltd.), vinyl acetate content: 28% by mass, MFR (measured in accordance with JIS K 7210-99, at 190°C, under a load of 2.16 kg): 1 g/10 min

Propylene-based polymer (B)

As an isotactic homopolypropylene (hereinafter, abbreviated as h-PP), a propylene/ethylene copolymer (Tm: 160°C, melt flow rate (temperature 230°C, load: 2.16 kg): 3 g/10 min) was used.

Propylene-based polymer (C)

(C-1) Propylene/1-butene copolymer (PBR)

A propylene/1-butene copolymer (MFR (temperature 230°C): 7 g/10 min, Tm: 75°C, 1-butene content: 26 mol%, Mw/Mn: 2.1, crystallinity (WAXD method) : 28%) produced by a method described in WO 2004/87775 was used.

(C-2) Propylene/ethylene/1-butene copolymer (PBER)

A propylene/ethylene/1-butene random copolymer (MFR (temperature 230°C): 6.0 g/10 min, Tm: not observed, Ethylene content: 16 mol%, 1-butene content: 6 mol%, Mw/Mn: 2.0, Shore A hardness: 75, crystallinity (WAXD method): not higher than 5%, mm value: 90%) produced by a method described in WO 2004/87775 was used.

(C-3) Propylene/ethylene copolymer (PER)

A propylene/ethylene copolymer (MFR (temperature 230°C): 3.0g/10min, Tm: 46°C and 109°C, Ethylene content: 22 mol%, Mw/Mn: 2.1, Shore A hardness: 67) was used.

Filler (D)

(D-1) Magnesium hydroxide (Mg(OH)$_2$)

Magnifin H5IV (product name, (Mg(OH)$_2$) manufactured by Albemarle Corporation) was used. Average particle diameter d$_{50}$ = 1.6 to 2.0 micrometer ($\mu$m)

(D-2) Organic phosphinic acid salt

Exolit OP1230 (product name, organic phosphinic acid salt manufactured by Clariant) was used.

(D-3) Ammonium polyphosphate (APP)

Exolit AP462 (product name, ammonium polyphosphate (APP) manufactured by Clariant) was used.

(D-4) Si powder

DC4-7081 (product name, Si powder manufactured by Dow Corning Toray Co., Ltd.) was used.
Si powder serves as a flame retardance imparting agent and as a molding assistant (slip agent).

Modified olefin polymer (E)

Using the following ethylene/1-butene copolymer (E-1) produced with a metallocene catalyst, a maleic anhydride graft-modified ethylene/1-butene copolymer (E-2) was produced.

(E-1) Ethylene/1-butene copolymer (EBR)

An ethylene/1-butene copolymer (density: 870 kg/m$^3$, MFR (190°C): 0.5 g/10 min, Mw/Mn: 2.1)

(E-2) Graft-modified ethylene/1-butene copolymer (acid-modified EBR)

10 kg of the ethylene/1-butene copolymer (E-1) and a solution obtained by dissolving 50 g of maleic anhydride and 3 g of di-tert-butyl peroxide in 50 g of acetone were blended in a Henschel mixer.
The resultant blended product was introduced into a hopper of a monoaxial extruder having a screw diameter of 40 mm and L/D of 26, and was extruded into a strand at a resin temperature of 260°C and an extruded amount of 6 kg/h. The strand was water-coold and pelletized to provide a maleic anhydride graft-modified ethylene/1-butene copolymer (E-2).
From the resultant acid-modified ethylene/1-butene copolymer (E-2), unreacted maleic anhydride was extracted with acetone to measure a maleic anhydride graft amount in this copolymer. As a result, the graft amount was found to be 0.43% by mass.

Measurement methods of property values

Property values were measured as follows.

(1) Comonomer (ethylene and 1-butene) contents and mmmm (stereoregularity pentad isotacticity)

Comonomer contents and mmmm were determined by $^{13}$C-NMR spectrum analysis.

(2) Melt flow rate (MFR)

Melt flow rate of the ethylene/unsaturated ester copolymer (A) was measured at 190°C under a load of 2.16 kg in accordance with JIS K 7210-99.
Melt flow rate for the other polymers was measured at a temperature of 190°C or 230 °C under a load of 2.16 kg in accordance with ASTM D-1238.

(3) Melting point (Tm)

DSC exothermic and endothermic curves were determined, and a temperature at a top of the melting peak that had ΔH in heating of not less than 1 J/g was defined as Tm. This measurement was performed such that a sample was put in an aluminum pan and was heated at 100°C/min to 200°C, kept at 200°C for 5 minutes, and then cooled at 10°C/min to -150°C and thereafter heated at 10°C/min to 200°C; the exothermic and endothermic curves obtained at this time was used for the measurement.

(4) Molecular weight distribution (Mw/Mn)

Molecular weight distribution (Mw/Mn) was measured by GPC (gel permeation chromatography). The measurement was performed with the use of an orthodichlorobenzene solvent at a temperature of 140°C.

(5) Density

Density was measured in accordance with a method described in ASTM D 1505.

(6) Crystallinity

Crystallinity was determined by analysis of wide-angle X-ray profile obtained from a measurement using RINT2500 (manufactured by Rigaku Corporation) as a measurement apparatus, and CuK$\alpha$ as an X-ray source.

(7) Intrinsic viscosity [$\eta$]

An Ubbelohde viscometer was used. A polymer sample was dissolved in decalin and a viscosity of the solution was measured at a temperature of 135°C. From a value thus measured, an intrinsic viscosity was determined.

(8) Tensile strength at break, Elongation at break, Initial tensile modulus (Young's modulus)

In accordance with ASTM D638, a sheet of 2 mm in thickness was prepared with a press molding machine and this sheet was tested to measure breaking strength (TS), elongation at break (EL) and initial tensile modulus.

(9) Shore A hardness

In accordance with ASTM D2240, a sheet of 2 mm in thickness was prepared with a press molding machine, and this sheet was tested with an A-type measurement device and a scale was read immediately after the contact of an indenter.

(10) Shore D hardness

In accordance with ASTM D2240, a sheet of 2 mm in thickness was prepared with a press molding machine, and this sheet was tested with a D-type measurement device and a scale was read 5 seconds after the contact of an indenter.

(11) Limiting oxygen index (LOI)

In accordance with JIS K7201-2, a sheet of 2 mm in thickness was prepared with a press molding machine, and this sheet was tested to measure limiting oxygen index. Limiting oxygen index was used as an indicator of flame retardance.

(12) Thermal deformation

In accordance with JIS C3005, a sheet of 2 mm in thickness was prepared with a press molding machine, and this sheet was was used for measurement performed under predetermined conditions (90°C, 30min). Thermal deformation rato was used as an indicator of heat resistance.

(13) TMA softening temperature

A pressure of 2 kg/cm$^2$ was applied to a planar indentor of 1.8 mm in diameter with heating at a heating rate of 5°C/min, to measure a displacement (penetration depth). A temperature at the time when the penetration depth reached 500 $\mu$m was defined as a softening temperature. The softening temperature was used as an indicator of heat resistance.

(14) Vertical flame test (UL VW-1 test)

In accordance with UL 1580 standard, an article in the shape of an electric wire and electric cable was subjected to a vertical flame test (UL VW-1 test). The test result was used as an indicator of flame retardance.

Examples 1 to 12 and Comparative Examples 1 to 7

A composition with a formulation indicated in Table 1 was kneaded with a Labo Plastomill manufactured by TOYO SEIKI Co., Ltd.
This was formed into a sheet of 2 mm in thickness with a press molding machine (heating: a temperature of 190°C, and 7 min, cooling: a temperature of 15°C, 4 min, cooling rate: about 40°C/min). This sheet was evaluated in terms of elongation at break (EL), initial tensile modulus (Young modulus), Shore D hardness, heating deformation, TMA softening temperature and limiting oxygen index. The results are set forth in Table 1-1, Table 1-2 and Table 1-3.

[Table 1-1]

Table 1-1

| | Item | Unit | Comp. Ex. 1 | Comp. Ex. 2 | Comp. Ex. 3 | Comp. Ex. 4 | Ex. 1 | Ex. 2 | Ex. 3 | Ex. 4 | Ex. 5 | Ex. 6 |
|---|---|---|---|---|---|---|---|---|---|---|---|---|
| Composition | EVA-1 | wt% | 100 | 95 | 75 | | 80 | 85 | 75 | 55 | 75 | 75 |
| | h-PP | wt% | | | 20 | 100 | 2 | 1 | 2 | 5 | 10 | 10 |
| | PBER | wt% | | | | | 18 | 9 | 18 | 35 | 10 | |
| | PBR | wt% | | | | | | | | | | 10 |
| | Acid-modified EBR | wt% | | 5 | 5 | | | 5 | 5 | 5 | 5 | 5 |
| | Magnesium hydroxide | phr | 200 | 200 | 200 | 200 | 200 | 200 | 200 | 200 | 200 | 200 |
| Tensile test | Elongation at break | % | 340 | 310 | 190 | 20 | 250 | 290 | 280 | 260 | 230 | 220 |
| | Initial tensile modulus | MPa | 40 | 40 | 110 | 4700 | 60 | 50 | 60 | 70 | 70 | 80 |
| Shore D hardness (5 sec after) | | − | 33 | 34 | 45 | 72 | 37 | 36 | 37 | 40 | 41 | 43 |
| Heating deformation (90°C, 30 min) | | % | 18 | 15 | 4 | 1 | 11 | 10 | 8 | 5 | 5 | 5 |
| Limiting oxygen index | | % | 48 | 44 | 36 | 29 | 37 | 42 | 37 | 33 | 36 | 37 |

16

[Table 1-2]

Table 1-2

| Item | | Unit | Comp. Ex. 5 | Comp. Ex. 6 | Comp. Ex. 7 | Ex. 7 | Ex. 8 | Ex. 9 | Ex. 10 |
|---|---|---|---|---|---|---|---|---|---|
| Composition | EVA-2 | wt% | 100 | 95 | 75 | 80 | 75 | 55 | 75 |
| | h-PP | wt% | | | 20 | 2 | 2 | 5 | 10 |
| | PBER | wt% | | | | 18 | 18 | 35 | |
| | PBR | wt% | | | | | | | 10 |
| | Acid-modified EBR | wt% | | 5 | 5 | | 5 | 5 | 5 |
| | Magnesium hydroxide | phr | 200 | 200 | 200 | 200 | 200 | 200 | 200 |
| Tensile test | Elongation at break | % | 160 | 190 | 110 | 130 | 150 | 150 | 150 |
| | Initial tensile modulus | MPa | 200 | 170 | 330 | 200 | 180 | 190 | 220 |
| Shore D hardness (5 sec after) | | - | 53 | 53 | 58 | 54 | 52 | 52 | 54 |
| Limiting oxygen index | | % | 49 | 45 | 37 | 39 | 37 | 34 | 37 |
| TMA softening temperature | | °C | 117 | 130 | 163 | 128 | 139 | 152 | 154 |

[Table 1-3]

Table 1-3

| | Item | Unit | Ex. 11 | Ex. 12 |
|---|---|---|---|---|
| Composition | EVA-2 | wt% | 80 | 75 |
| | h-PP | wt% | 2 | 2 |
| | PBR | wt% | 18 | 18 |
| | Acid-modified EBR | wt% | 0 | 5 |
| | Magnesium hydroxide | phr | 200 | 200 |
| Tensile test | Elongation at break | % | | |
| | Initial tensile modulus | MPa | | |
| Shore D hardness (5 sec after) | | – | 53 | 50 |
| Limiting oxygen index | | % | – | – |
| TMA softening temperature | | °C | 120 | 126 |

In the embodiments using EVA having a vinyl acetate content of 41% but not using h-PP and PBER or PBR in combination as a polymer component (Comparative Example 1 and Comparative Example 2), the thickness loss ratio in heating deformation is high and thus heat resistance is insufficient. In the embodiment not using PBER or PBR in combination (Comparative Example 3) and in the embodiment not using EVA in combination (Comparative Example 4), flexibility and elongation at break are insufficient. By contrast, in the embodiments using EVA, h-PP and PBER in combination (Examples 1 to 6), articles excellent in the balance among flexibility, mechanical strength, elongation at break, heat resistance and flame retardance can be obtained.

In the embodiments using EVA having a vinyl acetate content of vinyl acetate content of 28% by mass but not using h-PP and PBER, PER or PBR as a polymer component in combination (Comparative Example 5 and Comparative Example 6), heat resistance is insufficient. In the embodiment not using PBER, PER or PBR in combination (Comparative Example 7), flexibility and elongation at break are insufficient. By contrast, in the embodiments using EVA, h-PP and PBER or PER in combination (Examples 7 to 12), articles excellent in the balance among flexibility, mechanical strength, elongation at break, heat resistance and flame retardance can be obtained.

Examples 13 to 16 and Comparative Examples 8 and 9

A composition with a formulation indicated in Table 2 was melt kneaded with a biaxial extruder having a screw diameter of 32 mm, L/D of 42) to give a corresponding resin compound. At this time, attention was paid to make sure that the resin temperature was not higher than 230°C.

Using an electric wire and electric cable coater, a copper core wire and cable (manufactured by Musashikinsen, 0.18 mm in diameter, 30-ply, pitch: 13, right-handed twining, outer diameter: 1.2 mm) was coated with the compound obtained, to provide an electric wire and electric cable (outer diameter: 4.0 mm).

The results of the property value measurement are set forth in Table 2. The electric wires and electric cables of Examples 14 and 15 passed the UL VW-1 test.

[Table 2]

Table 2

| | | | PHOS-10 | PHOS-11 | PHOS-12 | PHOS-13 | PHOS-14 | PHOS-12-2 |
|---|---|---|---|---|---|---|---|---|
| Item | | unit | Comp. Ex.8 | Comp. Ex.9 | Ex. 13 | Ex. 14 | Ex. 15 | Ex. 16 |
| Composition | EVA-2 | wt% | 100 | 80 | 80 | 80 | 80 | 80 |
| | h-PP | wt% | | 20 | 11 | 11 | 11 | 11 |
| | PBER | wt% | | | 9 | 9 | 9 | 9 |
| | Organic phosphinic acid salt OP1230 | phr | 40 | 40 | 20 | 40 | 60 | |
| | Ammonium polyphosphate AP462 | phr | | | | | | 20 |
| | Si powder DC4-7081 | phr | 5 | 5 | 5 | 5 | 5 | 5 |
| Tensile test | Tensile strength at break | MPa | 13 | 8.8 | 15 | 12 | 8.9 | 16 |
| | Elongation at break | % | 710 | 420 | 640 | 580 | 510 | 680 |
| | Initial tensile modulus | MPa | 42 | 120 | 48 | 81 | 110 | 37 |

**INDUSTRIAL APPLICABILITY**

The thermoplastic polymer composition of the present invention is also capable of containing fillers at a high proportion, and is excellent in the balance among mechanical strength, flexibility and heat resistance. Further, the thermoplastic polymer composition of the present invention is widely applicable for flame-retardant articles such as electric wires and electric cables and building materials.

When the thermoplastic polymer composition according to the present invention is applied for an insulating layer of an electric wire and electric cable sheath and for an electric wire and electric cable coating, the article according to the present invention is an electric wire and electric cable sheath and/or a coating layer. The electric wire and electric cable sheath and the coating layer are formed around electric wires and electric cables by a known method such as extrusion molding method.

The present invention can provide a thermoplastic polymer composition that is both highly flame-retardant and is flexible, and can provide articles thereof.

The thermoplastic polymer composition according to the present invention has advantageous effects as described above, and thus are suited for various articles such as electric wire and electric cable coating, tapes, films, flame-retardant sheets, pipes, blow-molded articles, flame-retardant wall paper, particularly suited for an electric wire and electric cable sheath and an insulator of an electric wire and electric cable and an electric wire and electric cable coating. In particular, taking advantage of its flexibility and its heat resistance, the thermoplastic polymer composition according to the present invention is used suitably for an electric wire and electric cable sheath and an electric wire and electric cable coating for consumer and household devices such as a power cord.

**Claims**

1. A thermoplastic polymer composition comprising 1 to 350 parts by mass of a filler (D) with respect to 100 parts by mass of polymer components that comprise 50 to 90% by mass of an ethylene/unsaturated ester copolymer (A); 1 to 40% by mass of a propylene polymer (B) having a melting point as measured by differential scanning calorimetry (DSC) of from 120 to 170°C; and 1 to 49% by mass of a propylene-based polymer (C) having a melting point as measured by differential scanning calorimetry (DSC) of lower than 120°C or not being observed, provided that the total amount of (A), (B) and (C) is 100% by mass.

2. The thermoplastic polymer composition according to Claim 1, wherein the propylene-based polymer (C) is at least one polymer selected from a propylene/ethylene random copolymer (C-0), a propylene/C4-20 $\alpha$-olefin random copolymer (C-1) and a propylene/ethylene/C4-20 $\alpha$-olefin random copolymer (C-2), and has (a) a molecular weight distribution (Mw/Mn) as measured by gel permeation chromatography (GPC) of 1 to 3.

3. The thermoplastic polymer composition according to Claim 1 or 2, wherein the propylene-based polymer (C) is a propylene/C4-20 $\alpha$-olefin random copolymer (C-1) satisfying the following requirement (b):

   (b) the melting point Tm (°C) and the content M (mol%) of a comonomer structural unit as determined by $^{13}$C-NMR spectrum measurement satisfy the equation (1):

   $$(1) \quad 146\exp(-0.022M) \geq Tm \geq 125\exp(-0.032M),$$

   wherein Tm is lower than 120°C.

4. The thermoplastic polymer composition according to Claim 1 or 2, wherein, the propylene-based polymer (C) is a propylene/ethylene/C4-20 $\alpha$-olefin random copolymer (C-2) satisfying the following requirement (n):

   (n) the propylene/ethylene/C4-20 $\alpha$-olefin random copolymer (C-2) contains 40 to 85 mol% of a structural unit derived from propylene, 5 to 30 mol% of a structural unit derived from ethylene, and 5 to 30 mol% of a structural unit derived from C4-20 $\alpha$-olefins, provided that the total amount of the structural unit derived from propylene, the structural unit derived from ethylene and the structural unit derived from C4-20 $\alpha$-olefins is 100 mol%.

5. The thermoplastic polymer composition according to any one of Claims 1 to 4, wherein the filler (D) is at least one filler selected from metal hydroxides, metal carbonates and metal oxides.

6. The thermoplastic polymer composition according to any one of Claims 1 to 4, wherein the filler (D) is selected from at least one filler selected from organic phosphinic acid salts and polyphosphoric acid compounds.

7. The thermoplastic polymer composition according to any one of Claims 1 to 6, wherein the ethylene/unsaturated ester copolymer (A) is a copolymer of ethylene and a vinyl ester compound.

8. The thermoplastic polymer composition according to Claim 7, wherein the ethylene/unsaturated ester copolymer (A) is a copolymer of ethylene and vinyl acetate that has a vinyl acetate content of from 25% by mass and up to 50% by mass.

9. The thermoplastic polymer composition according to any one of Claims 1 to 8, which further comprises a modified olefin polymer (E) wherein the proportion of a vinyl compound having a polar group according to the modification is 0.01 to 10 parts by mass based on 100 parts by mass of the total of (A), (B), (C) and (E).

10. An article comprising the thermoplastic polymer composition according to any one of Claims 1 to 9.

11. The article according to Claim 10, which is an insulator of an electric wire and electric cable or an electric wire and electric cable sheath.

**Patentansprüche**

1. Thermoplastische Polymerzusammensetzung, umfassend 1 bis 350 Gew.-Teile eines Füllstoffs (D), bezogen auf 100 Gew.-Teile Polymerkomponenten, die 50 bis 90 Massen-% eines Ethylen/ungesättigter Ester-Copolymers (A); 1 bis 40 Massen-% eines Propylenpolymers (B) mit einem Schmelzpunkt, gemessen durch Differential-Scanning-Kalorimetrie (DSC), von 120 bis 170°C; und 1 bis 49 Massen-% eines Propylen-basierten Polymers (C) mit einem Schmelzpunkt, gemessen durch Differential-Scanning-Kalorimetrie (DSC), der niedriger als 120°C ist oder nicht beobachtet wird, umfassen, mit der Maßgabe, dass die Gesamtmenge von (A), (B) und (C) 100 Massen-% beträgt.

2. Thermoplastische Polymerzusammensetzung gemäß Anspruch 1, wobei das Propylen-basierte Polymer (C) mindestens ein Polymer ist, das aus einem statistischen Propylen/Ethylen-Copolymer (C-0), einem statistischen Propylen/C4-20-α-Olefin-Copolymer (C-1) und einem statistischen Propylen/Ethylen/C4-20-α-Olefin-Copolymer (C-2) ausgewählt ist, und (a) eine Molekulargewichtsverteilung (Mw/Mn) von 1 bis 3, gemessen durch Gelpermeations-Chromatographie (GPC), aufweist.

3. Thermoplastische Polymerzusammensetzung gemäß Anspruch 1 oder 2, wobei das Propylen-basierte Polymer (C) ein statistisches Propylen/C4-20-α-Olefin-Copolymer (C-1) ist, das die folgende Voraussetzung (b) erfüllt:

    (b) der Schmelzpunkt Tm (°C) und der Gehalt M (Mol-%) einer comonomeren Struktureinheit, bestimmt durch $^{13}$C-NMR-Spektroskopie, erfüllt die Gleichung (1):

$$(1) \quad 146\exp(-0,022M) \geq Tm \geq 125\exp(-0,032M),$$

    wobei Tm niedriger als 120°C ist.

4. Thermoplastische Polymerzusammensetzung gemäß Anspruch 1 oder 2, wobei das Propylen-basierte Polymer (C) ein statistisches Propylen/Ethylen/C4-20-α-Olefin-Copolymer (C-2) ist, das die folgende Voraussetzung (n) erfüllt:

    (n) das statistische Propylen/Ethylen/C4-20-α-Olefin-Copolymer (C-2) enthält 40 bis 85 Mol-% einer von Propylen abgeleiteten Struktureinheit, 5 bis 30 Mol-% einer von Ethylen abgeleiteten Struktureinheit und 5 bis 30 Mol-% einer von C4-20-α-Olefinen abgeleiteten Struktureinheit, mit der Maßgabe, dass die Gesamtmenge der von Propylen abgeleiteten Struktureinheiten, der von Ethylen abgeleiteten Struktureinheiten und der von C4-20-α-Olefinen abgeleiteten Struktureinheiten 100 Mol-% beträgt.

5. Thermoplastische Polymerzusammensetzung gemäß einem der Ansprüche 1 bis 4, wobei der Füllstoff (D) mindestens ein Füllstoff ist, der aus Metallhydroxiden, Metallcarbonaten und Metalloxiden ausgewählt ist.

6. Thermoplastische Polymerzusammensetzung gemäß einem der Ansprüche 1 bis 4, wobei der Füllstoff (D) aus mindestens einem Füllstoff ausgewählt ist, der aus organischen Phosphinsäuresalzen und Polyphosphorsäureverbindungen ausgewählt ist.

7. Thermoplastische Polymerzusammensetzung gemäß einem der Ansprüche 1 bis 6, wobei das Ethylen/ungesättiger Ester-Copolymer (A) ein Copolymer von Ethylen und einer Vinylesterverbindung ist.

8. Thermoplastische Polymerzusammensetzung gemäß Anspruch 7, wobei das Ethylen/ungesättiger Ester-Copolymer (A) ein Copolymer von Ethylen und Vinylacetat ist, das einen Vinylacetatgehalt von 25 Massen-% bis 50 Massen-% aufweist.

9. Thermoplastische Polymerzusammensetzung gemäß einem der Ansprüche 1 bis 8, die zusätzlich ein modifiziertes Olefinpolymer (E) umfasst, wobei der Anteil einer Vinylverbindung mit einer polaren Gruppe gemäß der Modifikation 0,01 bis 10 Gew.-Teile, bezogen auf 100 Gew.-Teile der Gesamtmenge von (A), (B), (C) und (E), beträgt

10. Artikel, umfassend die thermoplastische Polymerzusammensetzung gemäß einem der Ansprüche 1 bis 9.

11. Artikel gemäß Anspruch 10, der ein Isolator für einen elektrischen Draht und ein elektrisches Kabel oder einen elektrischen Draht und eine elektrische Kabelhülle ist.


**Revendications**

1. Composition polymère thermoplastique comprenant 1 à 350 parties en masse d'un agent de remplissage (D) par rapport à 100 parties en masse de composants polymères qui comprennent 50 à 90 % en masse d'un copolymère d'éthylène / ester non saturé (A) ; 1 à 40 % en masse d'un polymère de propylène (B) ayant un point de fusion tel que mesuré par calorimétrie à balayage différentiel (DSC) de 120 à 170°C; et 1 à 49 % en masse d'un polymère à base de propylène (C) ayant un point de fusion tel que mesuré par calorimétrie à balayage différentiel (DSC) de moins de 120°C ou n'étant pas observé, à condition que la quantité totale de (A), (B) et (C) soit de 100 % en masse.

2. Composition polymère thermoplastique selon la revendication 1, dans laquelle le polymère à base de propylène (C) est au moins un polymère sélectionné parmi un copolymère statistique de propylène / éthylène (C-0), un copolymère statistique de propylène / α-oléfine en C4-20 (C-1) et un copolymère statistique de propylène / éthylène / α-oléfine en C4-20 (C-2), et a (a) une distribution de poids moléculaire (Mw/Mn) telle que mesurée par chromatographie par perméation sur gel (GPC) de 1 à 3.

3. Composition polymère thermoplastique selon la revendication 1 ou 2, dans lequel le polymère à base de propylène (C) est un copolymère statistique de propylène / α-oléfine en C4-20 (C-1) satisfaisant à la condition suivante (b) :

   (b) le point de fusion Tm (°C) et la teneur M (% en mole) d'une unité structurelle de comonomère telle que déterminée par une mesure de spectre $^{13}$C-RMN satisfont à l'équation (1) :

   $$(1)\ 146\exp\ (\text{-}0{,}022M) \geq Tm \geq 125\exp\ (\text{-}0{,}032M),$$

   dans laquelle Tm est inférieur à 120 °C.

4. Composition polymère thermoplastique selon la revendication 1 ou 2, dans laquelle le polymère à base de propylène (C) est un copolymère statistique de propylène / éthylène / α-oléfine en C4-20 (C-2) satisfaisant à la condition suivante (n):

   (n) le copolymère statistique de propylène / éthylène / α-oléfine en C4-20 (C-2) contient 40 à 85 % en mole d'une unité structurelle dérivée du propylène, 5 à 30 % en mole d'une unité structurelle dérivée de l'éthylène et 5 à 30 % en mole d'une unité structurelle dérivée d'α-oléfines en C4-20, à condition que la quantité totale de l'unité structurelle dérivée du propylène, l'unité structurelle dérivée de l'éthylène et l'unité structurelle dérivée des α-oléfines en C4-20 soit de 100 % en mole.

5. Composition polymère thermoplastique selon l'une quelconque des revendications 1 à 4, dans laquelle l'agent de remplissage (D) est au moins un agent de remplissage sélectionné parmi des hydroxydes de métal, des carbonates de métal et des oxydes de métal.

6. Composition polymère thermoplastique selon l'une quelconque des revendications 1 à 4, dans laquelle l'agent de remplissage (D) est sélectionné à partir d'au moins un agent de remplissage sélectionné parmi des sels d'acide phosphinique organique et des composés d'acide polyphosphorique.

7. Composition polymère thermoplastique selon l'une quelconque des revendications 1 à 6, dans laquelle le copolymère d'éthylène / ester non saturé (A) est un copolymère d'éthylène et d'un composé d'ester de vinyle.

8. Composition polymère thermoplastique selon la revendication 7, dans laquelle le copolymère d'éthylène / ester non saturé (A) est un copolymère d'éthylène et d'acétate de vinyle qui a une teneur en acétate de vinyle de 25 % en masse et jusqu'à 50% en masse.

9. Composition polymère thermoplastique selon l'une quelconque des revendications 1 à 8, qui comprend en outre un polymère d'oléfine modifié (E), dans laquelle la proportion d'un composé de vinyle ayant d'un groupe polaire selon la modification est de 0,01 à 10 parties en masse sur la base de 100 parties en masse du total de (A), (B), (C) et (E).

10. Article comprenant la composition polymère thermoplastique selon l'une quelconque des revendications 1 à 9.

11. Article selon la revendication 10, qui est un isolant d'un fil électrique et d'un câble électrique ou une gaine de fil électrique et de câble électrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003313377 A
- JP 2008097918 A
- JP 2008169257 A
- JP 2008094977 A
- JP 2009114230 A
- JP 2009054388 A
- JP 2009019190 A
- JP 2009216836 A
- WO 2004087775 A
- WO 200487775 A